# EUROPEAN PATENT APPLICATION

(11) **EP 2 966 377 A1**
(43) Date of publication of application: **13.01.2016**
(21) Application number: 15168880.1
(22) Date of filing: 22.05.2015
(51) Int. Cl.: F24F 13/20, F24F 1/00, F24F 11/00, H02G 3/32

(54) **CONNECTING WIRE FIXING DEVICE, ELECTRIC COMPONENT BOX USING THIS CONNECTING WIRE FIXING DEVICE, AND INDOOR UNIT OF AIR-CONDITIONING APPARATUS**

(30) Priority: 07.07.2014 JP 2014139648
(71) Applicant: Mitsubishi Electric Corporation, Chiyoda-ku Tokyo 100-8310 (JP)
(72) Inventor: NAITO, Yosuke, Tokyo, 102-0073 (JP); KOJIMA, Kazuhiro, Tokyo, 102-0073 (JP); OBA, Yasushi, Tokyo, 102-0073 (JP); OMURA, Hiroshi, Tokyo, 102-0073 (JP); OZAKI, Den, Tokyo, 102-0073 (JP); SUGAI, Syota, Tokyo, 102-0073 (JP); NIIMURA, Takuya, Tokyo, 102-0073 (JP)
(74) Representative: Pfenning, Meinig & Partner GbR

(57) **Abstract**

[Object] The present invention aims to suppress not only a tensile force in a pulling direction but also a tensile force in a twisting direction being applied to a connection part between a connecting wire and a terminal block regardless of the specifications of the connecting wire.

[Solution] Provided is a connecting wire fixing device 70 including a wire mounting member 12 and a wire presser 13 disposed opposite to each other so as to hold a connecting wire 200 therebetween, the wire mounting member 12 and the wire presser 13 being provided, in their opposite surfaces 12a, 13a, with wire presser ridges 50, 51, 52 stretching in a cross-wiring direction 310 at alternate positions in a wiring direction 300, and holding the connecting wire 200 by means of these ridges 50, 51, 52, wherein the ridges on at least one of the wire mounting member 12 side and the wire presser 13 side are composed of two or more ridges aligned in the wiring direction, and at least one ridge of the two or more ridges has a flat wire pressing surface at the protrusion tip, while the other ridges including those on the other side have a triangular shape with the protrusion tip forming an acute angle.

## Description

### Technical Field

The present invention relates to a connecting wire fixing device which can apply a high fixing force in a pulling direction as well as in a twisting direction, and to an electric component box and an indoor unit of an air-conditioning apparatus using this connecting wire fixing device.

### Background Art

A connecting wire fixing device commonly has a terminal block, a wire mounting member, and a wire presser, and holds a connecting wire (e.g., an inside-outside connecting wire and a power wire), which is inserted into the terminal block, between the wire mounting member and the wire presser.

That is, a plurality of wire presser ridges stretching in a cross-wiring direction are provided in portions of the wire mounting member and the wire presser separated from each other by a predetermined distance in a connecting wire pulling direction (direction in which the connecting wire is pulled out of the terminal block). The connecting wire is wired along a labyrinth wiring path formed by these ridges, and thereby pressed by protrusion tip parts of the ridges so as to be bent into a V- or W-shape and fixed.

In one type of connecting wire fixing device, all the ridges formed in the wire mounting member and the wire presser have a quadrangular shape in cross-section of the protrusion tip part (the wire pressing surface is flat) (see, e.g., Patent Literature 1).

In another type of connecting wire fixing device, of the ridges on the wire mounting member side and the wire presser side, all the ridges on one side have a triangular shape with the protrusion tip forming an acute angle, while all the ridges on the other side have a quadrangular shape in cross-section of the protrusion tip part (the wire pressing surface is flat) (see, e.g., Patent Literature 1 and Patent Literature 2).

In yet another type of connecting wire fixing device, all the ridges formed in the wire mounting member and the wire presser have a triangular shape with the protrusion tip forming an acute angle, and this type has become a mainstream in recent years (see, e.g., Patent Literature 3).

### Citation List

### Patent Literature

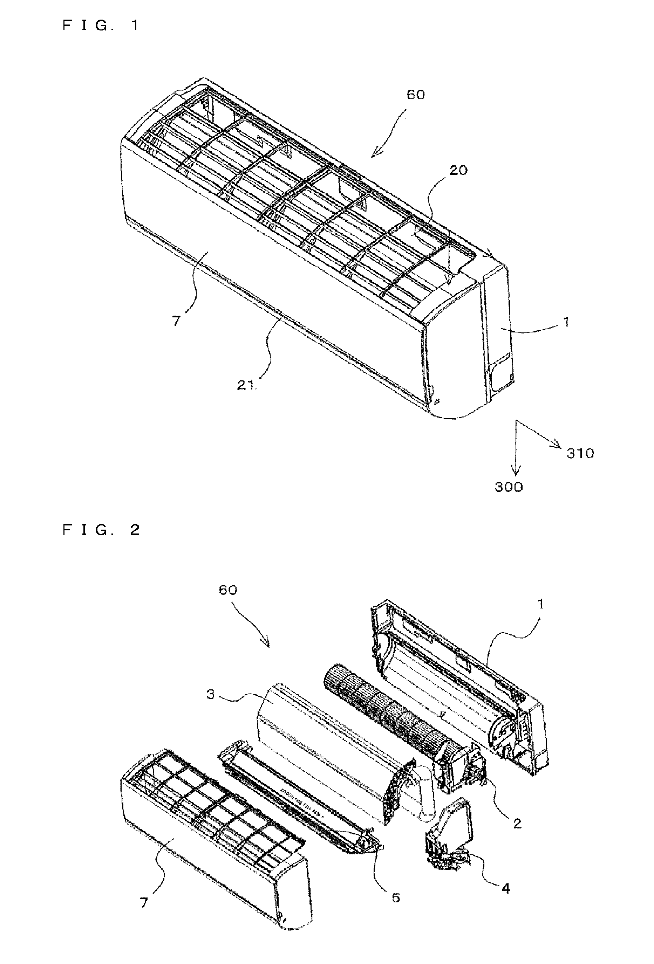

Patent Literature 1: Japanese Unexamined Patent Application Publication No. 10-148359 (Fig. 1, Fig. 2)
Patent Literature 2: Japanese Unexamined Patent Application Publication No. 2013-019643 (Fig. 3 to Fig. 5)
Patent Literature 3: Japanese Unexamined Utility Model Registration Application Publication No. 61-156273 (Fig. 1, Fig. 2)

### Summary of Invention

### Technical Problem

The first type of connecting wire fixing device, of which all the plurality of wire presser ridges have a quadrangular shape in cross-section of the protrusion tip part, can apply a high fixing force in the cross-wiring direction (hereinafter called a twisting direction) in which the ridges extend, as the ridges and the connecting wire come into surface contact with each other. On the other hand, this type has a drawback that a sufficient fixing force cannot be obtained in the direction in which the connecting wire is pulled out of the terminal block (hereinafter called a pulling direction or a wiring direction).

The second type of connecting wire fixing device, of which, of the ridges on the wire mounting member side and the wire presser side, all the ridges on one side have a triangular shape at the protrusion tip while all the ridges on the other side have a quadrangular shape in cross-section of the protrusion tip part, can apply a certain level of fixing force in the connecting wire pulling direction, but it is not sufficient compared with the fixing force in the twisting direction.

The third type of connecting wire fixing device, of which all the ridges formed in the wire mounting member and the wire presser have a triangular shape with the protrusion tip forming an acute angle, as the ridges and the connecting wire come into line contact with each other, can apply a sufficiently high fixing force in the connecting wire pulling direction, but a sufficient fixing force in the twisting direction cannot be obtained.

Adding to this problem is the specifications of connecting wires (wire diameter, cross-sectional shape, etc.) varying from country to country. Depending on the type of connecting wire, the connecting wire fixing force (especially in the twisting direction) falls short, which may result in failure of contact with the terminal block, disconnection, or coming off of the wire.

The present invention has been devised in order to solve these problems, and an object of the present invention is to provide a connecting wire fixing device, which can suppress not only a tensile force in the pulling direction but also a tensile force in the twisting direction being applied to the connection part between the connecting wire and the terminal block regardless of the specifications of the connecting wire, and to provide an electric component box and an indoor unit of an air-conditioning apparatus using this connecting wire fixing device.

### Solution to Problem

A connecting wire fixing device according to the present invention has a wire mounting member and a wire presser disposed opposite to each other so as to hold a connecting wire therebetween, the wire mounting member and the wire presser being provided, in surfaces opposite to each other, with wire presser ridges stretching in a cross-wiring direction at alternate positions in the wiring direction, and holding the connecting wire by means of these ridges, wherein the ridges on at least one of the wire mounting member side and the wire presser side are composed of two or more ridges aligned in the wiring direction, and at least one ridge of the two or more ridges has a flat wire pressing surface at its protrusion tip, while the other ridges including those on the other side have a triangular shape with their protrusion tip forming an acute angle.

### Advantageous Effects of Invention

In the present invention, one of the wire mounting member side and the wire presser side is provided with a mixture of the ridges having a flat wiring pressing surface at the protrusion tip and the ridges having a linear surface coming into contact with the connecting wire. Thus, a high fixing force can be applied not only against a tensile force in the pulling direction but also against a tensile force in the twisting direction, and a tensile force being applied to the connection part between various connecting wires and the terminal block can be suppressed. It is then possible to prevent contact failure, disconnection, and coming off of the wire.

### Brief Description of Drawings

[Fig. 1] Fig. 1 is a perspective view showing the external appearance of an indoor unit of an air-conditioning apparatus using a connecting wire fixing device according to an embodiment of the present invention.
[Fig. 2] Fig. 2 is an exploded perspective view showing the overall configuration of the indoor unit of the air-conditioning apparatus using the connecting wire fixing device according to the embodiment of the present invention.
[Fig. 3] Fig. 3 is a side view of the indoor unit of the air-conditioning apparatus using the connecting wire fixing device according to the embodiment of the present invention.
[Fig. 4] Fig. 4 is a side view of the indoor unit of the air-conditioning apparatus using the connecting wire fixing device according to the embodiment of the present invention, with a decorative panel removed.
[Fig. 5] Fig. 5 is an exploded perspective view of an electric component box using the connecting wire fixing device according to the embodiment of the present invention.
[Fig. 6] Fig. 6 is a front view of a wire presser of the electric component box using the connecting wire fixing device according to the embodiment of the present invention.
[Fig. 7] Fig. 7 is a perspective view of the electric component box using the connecting wire fixing device according to the embodiment of the present invention, with the wire presser removed.
[Fig. 8] Fig. 8 is a perspective view of the electric component box using the connecting wire fixing device according to the embodiment of the present invention, with the wire presser removed and a connecting wire connected.
[Fig. 9] Fig. 9 is a cross-sectional view along the line Z-Z of the electric component box of Fig. 8 before the connecting wire is connected.
[Fig. 10] Fig. 10 is an enlarged view of the part A of the electric component box of Fig. 9.
[Fig. 11] Fig. 11 is an enlarged view of the part A of the electric component box of Fig. 9 when the connecting wire is inserted into a terminal block.

### Description of Embodiments

In the following, the present invention will be described with the embodiment shown in the drawings.

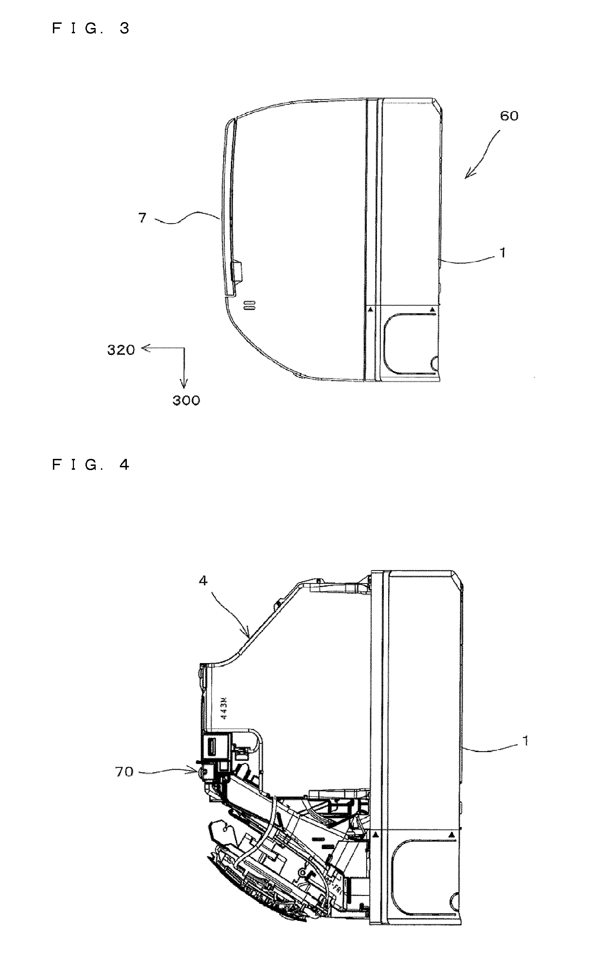

Fig. 1 is a perspective view showing the external appearance of an indoor unit of an air-conditioning apparatus using a connecting wire fixing device according to the embodiment of the present invention. Fig. 2 is an exploded perspective view showing the overall configuration of the indoor unit of the air-conditioning apparatus using the connecting wire fixing device according to the embodiment of the present invention. Fig. 3 is a side view of the indoor unit of the air-conditioning apparatus using the connecting wire fixing device according to the embodiment of the present invention. Fig. 4 is a side view of the indoor unit of the air-conditioning apparatus using the connecting wire fixing device according to the embodiment of the present invention, with a decorative panel removed.

As shown in Fig. 1 to Fig. 4, an indoor unit 60 of an air-conditioning apparatus using the connecting wire fixing device according to the embodiment of the present invention has a base 1, a blower fan 2, a heat exchanger 3, an electric component box 4 using a connecting wire fixing device 70, a drain pan unit 5, and a decorative panel 7. The blower fan 2, the heat exchanger 3, the electric component box 4, the drain pan unit 5, and the decorative panel 7 are mounted on the base 1.

In such an configuration, the indoor unit 60 suctions indoor air by means of the blower fan 2 through a suction port 20 in the upper surface of the indoor unit of the air-conditioning apparatus, turns the suctioned air into cool air or warm air through heat exchange in the heat exchanger 3, and blows the cool air or warm air indoors through a blow-out port 21. Drain water condensed on the surface of the heat exchanger 3 during cooling operation is collected in the drain pan unit 5. The collected water flows through a drain hose (not shown) and is discharged outdoors.

When viewed from the front side of the indoor unit 60, the electric component box 4 is mounted on the right side surface, and is fixed by a claw on the back surface side of the base 1, a claw of a fixing part of the blower fan 2, and a hook of the drain pan unit 5. After being mounted, the electric component box 4 is covered with the decorative panel 7 as shown in Fig. 1 and Fig. 3.

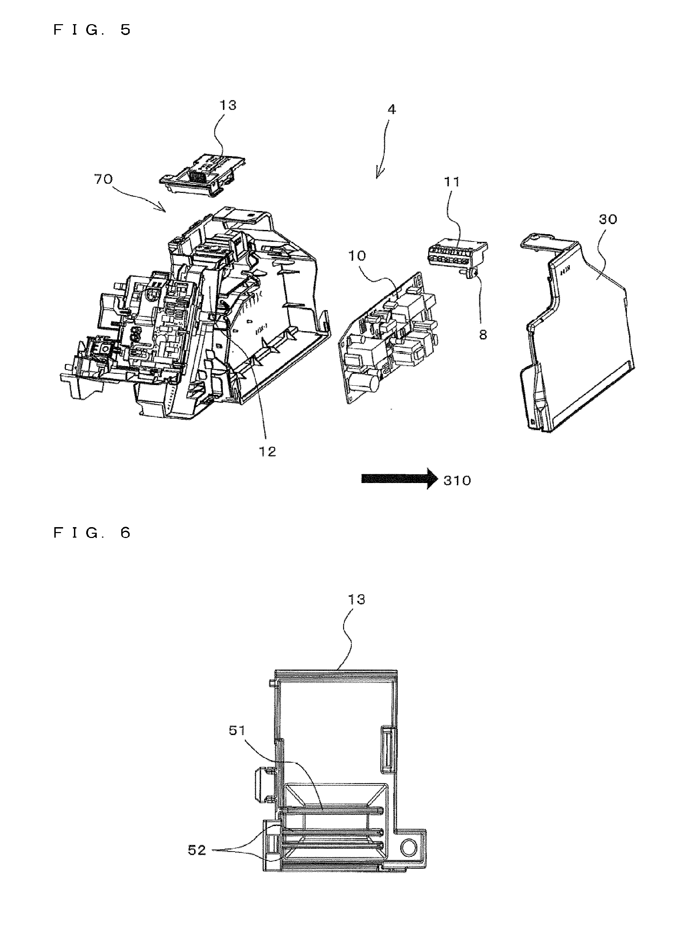

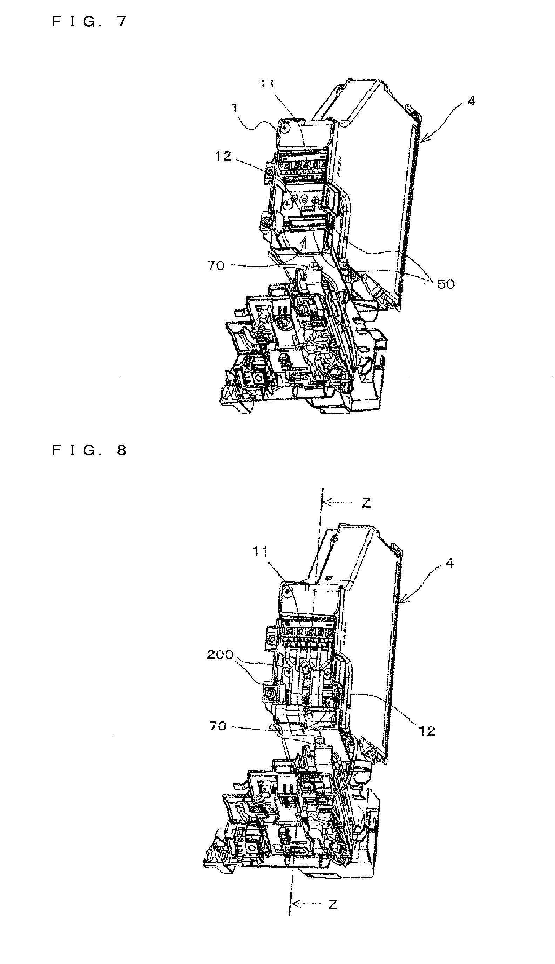

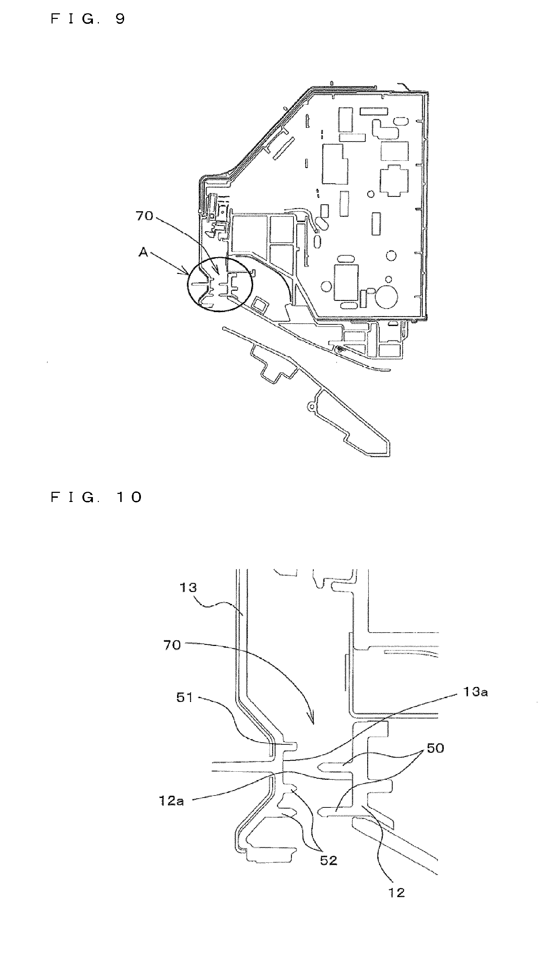

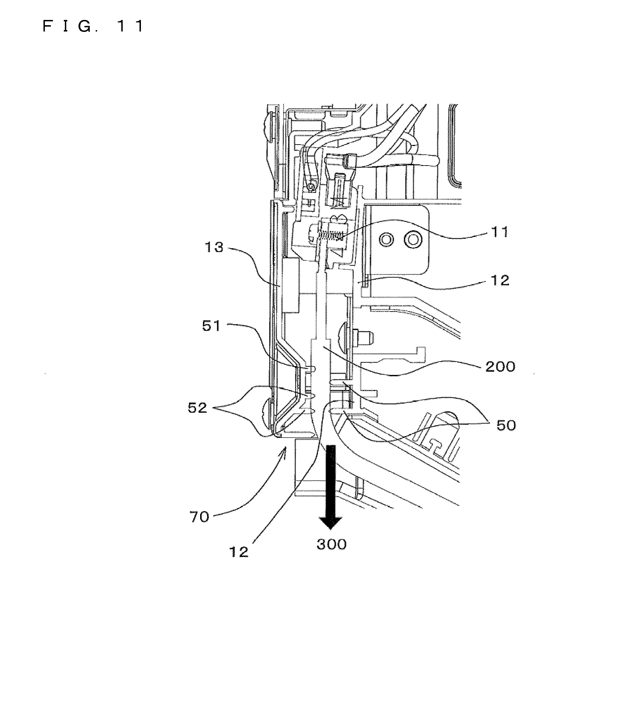

Fig. 5 is an exploded perspective view of the electric component box using the connecting wire fixing device according to the embodiment of the present invention. Fig. 6 is a front view of a wire presser of the electric component box using the connecting wire fixing device according to the embodiment of the present invention. Fig. 7 is a perspective view of the electric component box using the connecting wire fixing device according to the embodiment of the present invention, with the wire presser removed. Fig. 8 is a perspective view of the electric component box using the connecting wire fixing device according to the embodiment of the present invention, with the wire presser removed and a connecting wire connected. Fig. 9 is a cross-sectional view along the line Z-Z of the electric component box of Fig. 8 before the connecting wire is connected. Fig. 10 is an enlarged view of the part A of the electric component box of Fig. 9. Fig. 11 is an enlarged view of the part A of the electric component box of Fig. 9 when the connecting wire is inserted into the terminal block. For description, Fig. 1 to Fig. 3 described previously shall be referred to.

As shown in Fig. 5 to Fig. 8 and Fig. 11, the electric component box 4 includes a substrate 10, a terminal block 11 on which one end of an inside-outside connecting wire 200 serving as a connecting wire for connecting the indoor unit 60 and an outdoor unit (not shown) of the air-conditioning apparatus is fixed, the connecting wire fixing device 70, and a lid member 30. The connecting wire fixing device 70 includes a wire mounting member 12 on which the substrate 10, the terminal block 11, and the inside-outside connecting wire 200 are fixed, a wire presser 13, and wire presser ridges 50, 51, 52 formed in these wire mounting member 12 and wire presser 13.

The terminal block 11 is mounted on the wire mounting member 12 and then fixed with a screw 8. The terminal block 11 is provided with a plurality of holes in the longitudinal direction of the indoor unit (hereinafter, this direction is called a twisting direction 310 (Fig. 5)), and the connecting wire, i.e., the inside-outside connecting wire 200 is fixed by having its end inserted into one of the holes.

As shown in Fig. 9 to Fig. 11, the wire mounting member 12 and the wire presser 13 have portions separated from each other by a predetermined distance in the wiring direction, namely, a direction in which the inside-outside connecting wire 200 is pulled out of the terminal block 11 (hereinafter, this direction will be called a pulling direction 300 (Fig. 11)), and these portions are formed as plate-like opposite surfaces 12a, 13a disposed parallel and opposite to each other along the pulling direction 300. In the opposite surfaces 12a, 13a, the wire presser ridges 50, 51, 52 extending in a cross-wiring direction (twisting direction 310) are provided at alternate positions in the pulling direction 300. The protruding direction of all the ridges 50, 51, 52 coincides with the direction perpendicular to the plate-like opposite surfaces 12a, 13a (hereinafter, this direction will be called a vertical direction 320 (Fig. 3)). The ridges 50, 51, 52 are not limited in length in the twisting direction 310.

The inside-outside connecting wire 200 is wired along the labyrinth wiring path in the pulling direction 300 formed by these ridges 50, 51, 52, and is thereby pressed (held) by the protrusion tip parts of these ridges 50, 51, 52 so as to be bent into a V-or W-shape and fixed. The wire presser 13 is mounted on the wire mounting member 12 and then fixed with a screw (not shown).

The ridges 50, 51, 52 will be described in further detail with reference to Fig. 6 to Fig. 11.

In the opposite surface 13a of the wire presser 13, a mixture of two types of two or more ridges (here, three ridges) 51, 52 aligned in the pulling direction 300 is formed. That is, one ridge 51 has a quadrangular shape in cross-section at the protrusion tip (the wire pressing surface is flat), while all the other ridges 52 have a triangular shape with the protrusion tip forming an acute angle.

In the opposite surface 12a of the wire mounting member 12, two ridges 50 composed of one type of ridges aligned in the pulling direction 300 are formed. One ridge 50 of the two ridges 50 is disposed at a position alternate with the positions of the two types of ridges 51, 52 on the wire presser 13 side in the pulling direction 300, namely, disposed so as to be positioned between the ridges 51, 52 in the pulling direction 300. Similarly to the ridges 52 on the wire presser 13 side, both the ridges 50 on the wire mounting member 12 side have a triangular shape with the protrusion tip forming an acute angle.

In order to protect the inside-outside connecting wire 200, all the ridges 50 on the wire mounting member 12 side and the ridges 52 on the wire presser 13 side, which have a triangular shape with the protrusion tip forming an acute angle, are rounded at the tip.

Thus, the connecting wire fixing device 70 according to the embodiment of the present invention has the ridges 50, 51, 52 for holding the inside-outside connecting wire 200, which are composed of the ridges 51 formed on the wire presser 13 side and having a quadrangular shape in cross-section at the protrusion tip (the wire pressing surface is flat), the ridges 52 also formed on the wire presser 13 side and having a triangular shape with the protrusion tip forming an acute angle, and the ridges 50 formed on the wire mounting member 12 side and having a triangular shape with the protrusion tip forming an acute angle.

The ridges 50, 52, of which the protrusion tip forms an acute angle and which have a linear surface coming into contact with the inside-outside connecting wire 200, can apply a higher stress linearly to the inside-outside connecting wire 200 than the ridges 51 having a flat wire pressing surface at the protrusion tip, and are therefore effective as a presser in the pulling direction.

In the connecting wire fixing device 70 according to the embodiment of the present invention, the ridges 50, 52 having a linear surface coming into contact with the inside-outside connecting wire 200 are formed on both the wire mounting member 12 and the wire presser 13. Therefore, a sufficiently high fixing force can be applied in the pulling direction 300 of the inside-outside connecting wire 200.

The ridges 51 having a flat wire pressing surface at the protrusion tip produce a higher frictional force than the ridges 50, 52 having a linear surface coming into contact with the inside-outside connecting wire 200, and are therefore effective as a presser in the twisting direction of the inside-outside connecting wire 200.

In the connecting wire fixing device 70 according to the embodiment of the present invention, the wire presser 13 side is provided with a mixture of the ridges 51 having a flat wire pressing surface at the protrusion tip and the ridges 52 having a linear surface coming into contact with the inside-outside connecting wire 200. Therefore, a high fixing force can be applied not only against a tensile force in the pulling direction 300 but also against a tensile force in the twisting direction 310, and a tensile force being applied to the connection part between various connecting wires (various inside-outside connecting wires including connecting wires with a round cross-sectional shape, for example) and the terminal block 11 can be suppressed. It is then possible to prevent contact failure, disconnection, and coming off of the wire.

According to the embodiment of the present invention, since the above-described connecting wire fixing device 70 is used for the electric component box 4, the electric component box 4 with a highly reliable wire connection part can be obtained.

According to the embodiment of the present invention, since the above-described connecting wire fixing device 70 is used for the indoor unit 60 of the air-conditioning apparatus, the indoor unit 60 with a highly reliable wire connection part can be obtained.

In the above-described embodiment, the example has been described in which the wire presser 13 side is provided with a mixture of the ridges 51 having a flat wire pressing surface at the protrusion tip and the ridges 52 having a linear surface coming into contact with the inside-outside connecting wire 200. However, these different types of ridges may be provided on the wire mounting member 12 side.

### Reference Signs List

1 base 2 blower fan 3 heat exchanger 4 electric component box 5 drain pan unit 7 decorative panel 8 screw 10 substrate 11 terminal block 12 wire mounting member 12a, 13a opposite surfaces 13 wire presser 20 suction port 21 blow-out port 30 lid member 50, 51, 52 ridges 60 indoor unit 70 connecting wire fixing device 200 inside-outside connecting wire (connecting wire) 300 pulling direction (wiring direction) 310 twisting direction (cross-wiring direction) 320 vertical direction

## Claims

1. A connecting wire fixing device (70) comprising a wire mounting member (12) and a wire presser (13) disposed opposite to each other so as to hold a connecting wire (200) therebetween, the wire mounting member (12) and the wire presser (13) being provided, in surfaces opposite to each other, with wire presser ridges (50, 51, 52) stretching in a cross-wiring direction (310) at alternate positions in the wiring direction (300), and holding the connecting wire (200) by means of these ridges (50, 51, 52), wherein
the ridges on at least one of the wire mounting member (12) side and the wire presser (13) side are composed of two or more ridges aligned in the wiring direction (300), and at least one ridge of the two or more ridges has a flat wire pressing surface at its protrusion tip, while the other ridges including those on the other side have a triangular shape with their protrusion tip forming an acute angle.

2. The connecting wire fixing device (70) of claim 1, wherein the ridges having a triangular shape with the protrusion tip forming an acute angle are rounded at the tip.

3. An electric component box comprising a substrate (10), a terminal block (11) on which one end of the connecting wire (200) is fixed and a connecting wire fixing device (70) of claim 1 or 2 which holds the connecting wire (200) fixed on the terminal block (11).

4. An indoor unit of an air-conditioning apparatus comprising a heat exchanger (3), a blower fan (2), a terminal block (11) on which one end of the connecting wire (200) is fixed, and a connecting wire fixing device (70) of claim 1 or 2 which holds the connecting wire (200) fixed on the terminal block (11).
